# EUROPÄISCHE PATENTSCHRIFT

(11) **EP 1 967 828 B1**
(45) Veröffentlichungstag und Bekanntmachung des Hinweises auf die Patenterteilung: **27.12.2017**
(21) Anmeldenummer: 08002345.0
(22) Anmeldetag: 08.02.2008
(51) Int. Cl.: G01F 1/74, G01F 1/66

(54) **Fluidzähler**
Fluid counter
Compteur de fluide

(30) Priorität: 09.03.2007 DE 102007011546
(43) Veröffentlichungstag der Anmeldung: 10.09.2008
(60) Teilanmeldung: 16157601.2
(73) Patentinhaber: Diehl Metering GmbH, 91522 Ansbach (DE)
(72) Erfinder: Sonnenberg, Hans-Michael, 90616 Neuhof/Zenn (DE); Schmidt-Schoenian, Axel, 91732 Merkendorf (DE); Meßthaler, Roland, 91575 Windsbach (DE)
(74) Vertreter: Kummer, Ralf

(56) Entgegenhaltungen:
- EP-A- 1 096 236
- WO-A-00/23773
- GB-A- 2 429 061
- US-A1- 2002 124 661

## Beschreibung

Die vorliegende Erfindung betrifft einen Fluidzähler mit einem Messrohrgehäuse. einer im Messrohrgehäuse befindlichen Messstrecke, einer Ultraschallwandleranordnung aus mindestens einem Ultraschallwandler zum Erzeugen eines Ultraschallsignals und/oder zur Umwandlung eines die Messstrecke durchlaufenden Ultraschallsignals in ein elektrisches Signal und eine Umlenkeinrichtung zur Umlenkung des Ultraschallsignals in Längsrichtung des Messrohrs gemäß dem Oberbegriff des Anspruchs 1.

Ein Ultraschallzähler gemäß dem Oberbegriff des Anspruchs 1 ist aus der WO 00/23773 bekannt. Hierbei wird an der Außenseite einer Rohrleitung eine Mehrzahl von Ultraschallwandlern aufgesetzt, deren Flächennormale senkrecht zur Längsachse der Rohrleitung angeordnet ist. Die Ultraschallwandler können hierbei in einer bezogen auf die Uhrzeigerposition 1 - 5 Uhr-Position bzw. 7 - 11 Uhr-Position an der Rohrleitung angeordnet sein. Bei weiteren Ausgestaltungen, bei denen das von einem ersten Ultraschallwandler ausgesandte Ultraschallsignal von einem zweiten Ultraschallwandler empfangen werden soll, sind die Ultraschallwandler an der Außenseite der Rohrleitung derart positioniert, dass deren Flächennormale schräg zur Längsachse des Messrohrs liegt. Über Kabel sind die Ultraschallwandler mit einem eigenständigen Elektronikgehäuse verbunden, welches auch ein Display aufweist.

Aus der Broschüre Meßsystem "ultrakon®" Ultraschall-Wärmezähler EWZ 810 der Fa. IWK Regler und Kompensatoren GmbH ist ein Wärmezähler bekannt, welcher ein Anschlussgehäuse sowie ein unmittelbar am Anschlussgehäuse befestigtes Elektronikgehäuse ohne Anzeige umfasst. Zusätzlich ist ein separates Rechenwerk mit Anzeige vorgesehen. Das Rechenwerk kann einerseits direkt am Wärmezähler in einem rechten Winkel zum Elektronikgehäuse positioniert angeordnet sein. Das Rechenwerk kann bei Bedarf andererseits auch entfernt vom Wärmezähler an der Wand montiert sein oder sich ebenfalls entfernt vom Wärmezähler in einer Schalttafel befinden. Über einen optionalen Beschlag kann das Rechenwerk statt in einer horizontalen oder vertikalen Lage auch in einer abgewinkelten Lage direkt am Wärmezähler positioniert werden. Bei der Montage des Volumengebers ist stets darauf zu achten, dass sich das Elektronikgehäuse immer seitlich am Messrohrgehäuse befindet. Eine andere Anordnung führt zu Fehlmessungen.

Ähnliche Anordnungen sind auch aus der Betriebsanleitung zu "Statischer Wärmezähler 2WR4" Bestell-Nr. NZ 839e-000 der Siemens AG sowie der Broschüre ULTRAFLOW II E20 499 der Fa. Kamstrup A/S bekannt.

Die US 2002/0124661 A1 zeigt eine Vorrichtung zur Messung von Strömungen, bei der die Ultraschallwandler bezogen auf den Querschnitt des Messrohrs ebenfalls seitlich geneigt angeordnet sein können, deren Flächennormale jedoch ebenfalls schräg zur Längsachse des Messrohrs verlaufend angeordnet ist.

Die EP 1 096 236 A2 beschreibt einen Ultraschall-Durchflussmesser für Fluide, bei dem die Flächennormale des jeweiligen Ultraschallwandlers parallel zur Längsachse des Messrohrs angeordnet ist und das den jeweiligen Ultraschallwandler verlassende Ultraschallsignal an einer im Messrohr angeordneten Krümmung schräg zur gegenüberliegenden Wandung des Messrohrs reflektiert und von dort ebenfalls schräg weiterreflektiert wird, bis es den zweiten Ultraschallwandler erreicht.

Die DE 103 27 076 B3 beschreibt einen Fluidzähler, der eine mehrteilige Messrohranordnung umfasst. Ein aus Messing bestehendes Messrohr befindet sich innerhalb eines Messrohrgehäuses. Die Ultraschallwandler sind an der Oberseite des Messrohrgehäuses in einer entsprechenden Ausnehmung positioniert. An der Oberseite der Wandler befinden sich üblicherweise die Elektronikplatine sowie das Anzeigeelement jeweils in paralleler Anordnung zur Ultraschallwandlerfläche. Als genormte Einbauebene ist bei einer horizontalen Rohrleitung z. B. für das Medium Wasser eine Anzeige mit waagrecht ausgerichteter d.h. horizontal ausgerichteter Anzeigeebene oder eine um 90° gedrehte (senkrechte) Anzeigeebene und bei einer senkrechten Rohrleitung eine Anzeige mit senkrechter Anzeigeebene vorgesehen. Die Einbauebene horizontal mit waagrechter d.h. horizontaler Anzeigeebene ist die häufigste in der Praxis vorkommende Einbaulage. Der Ultraschallwandler sitzt aufgrund der wichtigsten, vorbeschriebenen Anordnungen daher an der höchsten mit Fluid durchströmten Stelle. Daraus resultiert der Nachteil, dass sich in dem Fluid befindliche Gasblasen an der Oberfläche der Wandler festsetzen und hierdurch Störungen bei der Messung verursachen. Ein Verdrehen des gesamten Fluidzählers zur Vermeidung der Belegung der Wandlerobertlächen mit Gasblasen ist nicht möglich, da Fluidzähler in genau festgelegten Einbaulagen montiert werden müssen und bei einer Verdrehung zudem die Ablesbarkeit der Anzeigeeinrichtung nicht mehr gewährleistet wäre. Der Einbausituation sind daher lediglich sehr enge Grenzen gesetzt.

Aus der GB 2 429 061 A ist ein Ultraschalldurchflussmesser mit einem u-förmigen Messrohrgehäuse bekannt. Das Messrohrgehäuse wird von einem weiteren Gehäuse umgeben, welches ein Hauptgehäuseteil, ein Bodenteil sowie einen Deckel umfasst. Das Bodenteil und der Hauptgehäuseteil bilden eine Aufnahme für das Messrohrgehäuse. Elektronikteile befinden sich innerhalb Hauptgehäuseteils.

Die Aufgabe der vorliegenden Erfindung besteht darin, einen gattungsgemäßen Fluidzähler zur Verfügung zu stellen, bei dem einerseits Messungenauigkeiten aufgrund von Gasblasen im Bereich der Oberfläche des Wandlers vermieden werden, zum anderen die engen Vorgaben beim Einbau von Fluidzählern eingehalten werden können.

Die vorliegende Aufgabe wird beim gattungsgemäßen Fluidzähler durch die Merkmale des kennzeichnenden Teils von Anspruch 1 gelöst. Erfindungsgemäß ist ein weiteres Gehäuse für die Aufnahme von Elektronikteilen vorgesehen, wobei das Messrohrgehäuse in einer Halteeinrichtung untergebracht ist, die an das Gehäuse montierbar ist. Aufgrund der konzeptionellen Trennung dieser beiden Gehäuse sowie deren winkelversetzten Verbindbarkeit über die Halteeinrichtung lassen sich die beiden Gehäuse in einfacher Weise in einer gewünschten Winkellage zueinander positionieren. Gemäß der vorliegenden Erfindung liegen der oder die Ultraschallwandler nicht mehr an der obersten Position des vom Medium durchströmten Raums sondern tiefer. Hierdurch werden die im Fluid vorhandenen Gasbläschen an einer Stelle im Inneren des Zählers gesammelt, an der sie keine die Genauigkeit der Messung beeinflussende Auswirkung haben. Gleichzeitig bleibt allerdings die gute Ablesbarkeit des Fluidzählers durch die weiterhin an der höchsten Stelle befindliche Anzeigeeinrichtung bestehen. Die Erfindung gewährleistet, dass der Fluidzähler gut ablesbar ist und die Bestimmungen eines normgerechten Einbaus erfüllt gleichzeitig aber Störungen aufgrund Luftbläschen an der Oberseite des Messrohrgehäuses wirksam ausgeschlossen werden können.

Der seitliche Winkelversatz der Flächennormalen N des Ultraschallwandlers liegt zur Senkrechten bezogen auf die Anzeigeebene A in einem Winkelbereich zwischen 30° - 60°, vorzugsweise 40° - 50°, besonders vorzugsweise 42° - 48°. Beispielsweise kann der Winkel 45° betragen.

Alternativ trifft das Ultraschallsignal in Einbaulage von der Unterseite auf die Umlenkeinrichtung.

Der Vorteil des seitlichen Winkelversatzes von 30° - 60° liegt auch darin begründet, dass, wenn die Anzeigeeinheit um 90° aus der Einbauebene gedreht wird, um seitlich den Zähler abzulesen, ebenfalls die Wandler nicht am höchsten Punkt stehen und damit die Luftblasen sich auch dann nur seitlich zum Wandler ansammeln können. Dies wäre bei einem Winkel von 90° nicht gewährleistet.

Die vorgenannten Winkelangaben der Flächennormalen N des Ultraschallwandlers beziehen sich auf die Senkrechte zur Anzeigeebene A des Anzeigeelements oder zumindest einer Haltevorrichtung für ein externes Anzeigeelement.

Zweckmäßigerweise ist die Halteeinrichtung derart ausgebildet, dass das Messrohrgehäuse in der Halteeinrichtung festklemmbar ist. Diese Art der mechanischen Fixierung ermöglicht es, aufwendige Arbeiten (wie z. B. das Einbringen von Gewindebohrungen) am Messrohrgehäuse, welches insbesondere aus Metall besteht, zu verzichten. Es sind lediglich noch geringfügige mechanische Bearbeitungen des Messrohrgehäuses (z. B. das Einbringen von Aufnahmelaschen für Temperaturfühler und/oder Durchgangsbohrungen für Ultraschallsignale) notwendig. Hierdurch können die Teilevielzahl reduziert und die Kosten der Herstellung deutlich gesenkt werden.

Dadurch, dass die Halteeinrichtung ein erstes Halteteil sowie ein zweites Halteteil aufweist, die eine Ausnehmung zur Aufnahme des Messrohrgehäuses bilden, wird eine konstruktiv besonders einfache Lösung zur Fixierung geschaffen. Die Halteeinrichtung der vorbezeichneten Art umgreift das Messrohrgehäuse nach Art einer Schelle.

Die vorher beschriebene Art der Befestigung hat den zusätzlichen Vorteil, dass mindestens ein Funktionsteil durch die umgreifende Halteeinrichtung in Position gehalten werden kann. Bei dem Funktionsteil handelt es sich beispielsweise um einen Wandler, der sich in einer Tasche oder Ausnehmung, beispielsweise am Halteteil, befindet und/oder um einen Temperaturfühler. Es müssen lediglich Ausnehmungen für diese Funktionsteile vorgesehen sein, die verarbeitungstechnisch einfach zu realisieren sind. Die Fixierung erfolgt durch den Umgriff der Halteeinrichtung. Dieser Umgriff der Halteeinrichtung verhindert, dass durch den Innendruck des Mediums die zu haltenden Elemente (Wandler/T-Fühler) aus ihrer Position gedrückt werden.

Zweckmäßigerweise kann zwischen dem Messrohrgehäuse und der Halteeinrichtung eine Verdrehsicherung vorgesehen sein, beispielsweise in Form eines Vorsprungs an der Halteeinrichtung, der in eine entsprechende Ausnehmung am Messrohrgehäuse eingreift oder umgekehrt. Beim Ansetzen eines Drehmoments an dem Messrohrgehäuse, beispielsweise beim Einschrauben desselben in eine Fluidleitung, kann hierdurch eine Verschiebung der Winkellage des Messrohrgehäuses zur Halteeinrichtung und damit eine Fehlposition und/oder Beschädigung des Inneren vermieden werden.

Zweckmäßigerweise besteht die Möglichkeit, das zweite Halteteil mit dem Gehäuse lösbar, beispielsweise über Schnappverbindungen oder dergleichen, zu verbinden. Das zweite Halteteil kann dann eigenständig produziert werden.

Dadurch, dass die jeweilige Montageposition in einen Bereich an dem zweiten Halteteil vorgesehen ist, der seitlich vom Gehäuse für die Elektronikteile vorspringt, ist die bzw. sind die Montageposition (en) zur Befestigung des ersten Halteteils besonders einfach zugänglich. Insbesondere kann eine Art verandaförmiger Vorsprung des zweiten Halteteils am Gehäuse für die Elektronikteile vorgesehen sein.

Zweckmäßigerweise ist im Gehäuse mindestens ein Führungskanal für eine Drahtverbindung vom jeweiligen Wandler und/oder von einem Temperaturfühler vorgesehen. Der Führungskanal gewährleistet beim Zusammenbau eine vorbestimmte Ausrichtung und Positionierung des betreffenden Verbindungsdrahts und damit eine leichte Montierbarkeit sowie eine Reduzierung von Montagefehlern.

Das erste Halteteil kann zweckmäßigerweise nach Art einer Schale ausgebildet sein, die das Messrohrgehäuse unterseitig vorzugsweise über dessen Länge umfasst. Alternativ können aber auch mehrere z. B. zwei Halteteile auf Abstand (z. B. an der Vorderseite sowie Rückseite) das Messrohrgehäuse zur Fixierung desselben am zweiten Halteteil nach Art einer Rohrschelle umgreifen.

Wird bei dem Verspannen der beiden Gehäuse miteinander im Kontaktbereich auch der Ultraschallwandler mit eingespannt, können am Ultraschallwandler auftretende Druckkräfte in einfacher Weise vom Gehäuse abgefangen werden.

Die Position erlaubt es zudem, zusätzliche Funktionsteile, wie z.B. einen Temperaturfühler ohne aufwendige Bearbeitungsmaßnahmen am Messrohrgehäuse lagefest und sicher zu fixieren, in dem das Funktionsteil in der Montagelage durch das Gehäuse für die Elektronikbauteile bzw. durch das Übergriffteil lagefixiert ist.

Zweckmäßige Ausgestaltungen der vorliegenden Erfindung werden anhand von Zeichnungsfiguren nachstehend näher erläutert. Wiederkehrende Merkmale sind der Übersichtlichkeit halber lediglich einmal angegeben. Es zeigen:
- Fig. 1: eine stark vereinfachte, schematisierte Längsteilschnittdarstellung des Messrohrgehäuses einer ersten Ausgestaltung des Fluidzählers gemäß der Erfindung;
- Fig. 2: eine Schnittdarstellung entlang der Linie I-I von Fig. 1;
- Fig. 3: eine stark vereinfachte, schematisierte Teilschnittdarstellung der ersten Ausgestaltung des erfindungsgemäßen Fluidzählers mit montiertem Elektronikgehäuse;
- Fig. 4: eine Teilschnittdarstellung eines nicht zur Erfindung gehörenden Fluidzählers (ohne Messrohrgehäuse);
- Fig. 5: eine Darstellung eines nicht zur Erfindung gehörenden Gehäuses für die Elektronikbauteile mit daran befindlichem zweiten Halteteil der Halteeinrichtung in Draufsicht (Fig. 5A), in perspektivischer Ansicht (Fig. 5B) sowie mit montiertem Messrohrgehäuse (Fig. 5C);
- Fig. 6: eine Ansicht eines ebenfalls nicht zur Erfindung gehörenden Fluidzählers mit vergleichsweiser Anordnung von Messrohrgehäusen unterschiedlicher Nennweiten in Seitenansicht (Fig. 6A) sowie Ansicht der Stirnseite (Fig. 6B);
- Fig. 7: eine stark vereinfachte, schematisierte Darstellung eines ebenfalls nicht zur Erfindung gehörenden Fluidzählers in Seitendarstellung sowie
- Fig. 8: eine stark vereinfachte, schematisierte Darstellung eines ebenfalls nicht zur Erfindung gehörenden Fluidzählers in Seitendarstellung.

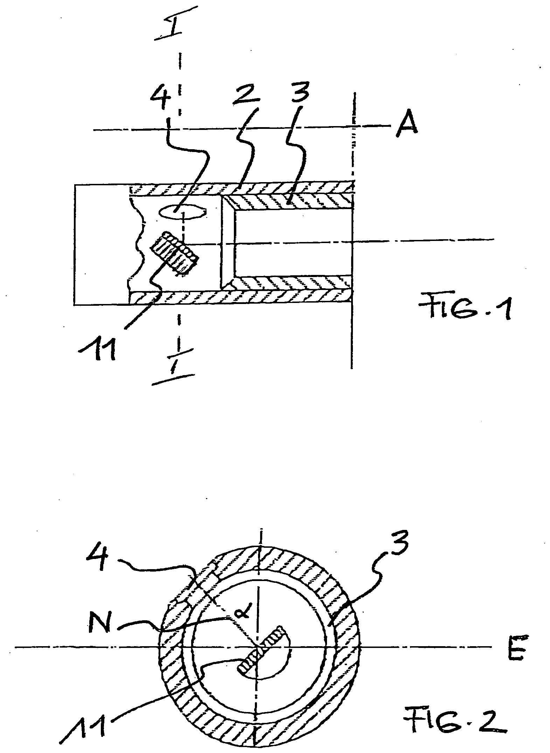

Fig. 1 zeigt eine stark vereinfachte, schematisierte Schnittdarstellung eines Teils einer ersten Ausgestaltung eines Fluidzählers 1 gemäß der vorliegenden Erfindung. Der Fluidzähler umfasst ein Messrohrgehäuse 2, in dem zur Gewährleistung einer Messstrecke ein langgestrecktes Messrohr 3 positioniert ist. Innerhalb des Messrohrs befindet sich eine Umlenkeinrichtung 11, z.B. in Form eines Spiegels, mit dem ein von einem Ultraschallwandler 4 ausgesendetes Ultraschallsignal in Längsrichtung zum Messrohr 3 reflektiert wird und umgekehrt.

Auf dem Messrohrgehäuse 2 sitzt ein in Fig. 1 der Übersichtlichkeit halber nicht dargestelltes, weiteres Gehäuse, welches Elektronikelemente, wie z.B. ein Anzeigeelement, beispielsweise eine LCD-Anzeige oder dergleichen, beherbergt. Die Ebene des Anzeigeelements ist mit A gekennzeichnet.

Die Lage der Einbauebene ist in Fig. 2 mit E gekennzeichnet. Wie sich aus Fig. 2 ergibt, ist gemäß der Erfindung der jeweilige Ultraschallwandler 4 nicht an der obersten Stelle im Inneren des Messrohrgehäuses 2 angeordnet, sondern befindet sich demgegenüber an einer Position, die zur obersten Stelle in einen Winkel α schräg zur Senkrechten Einbauebene E versetzt liegt. Die Neigung der Flächennormalen N des Ultraschallwandlers 4 zur Senkrechten der Ebene E wird mit dem Winkel α gekennzeichnet. Gasbläschen im Fluid lagern sich üblicherweise an der obersten Stelle im Inneren des Messrohrgehäuses ab und beeinträchtigen daher die Ultraschallausbreitung nicht.

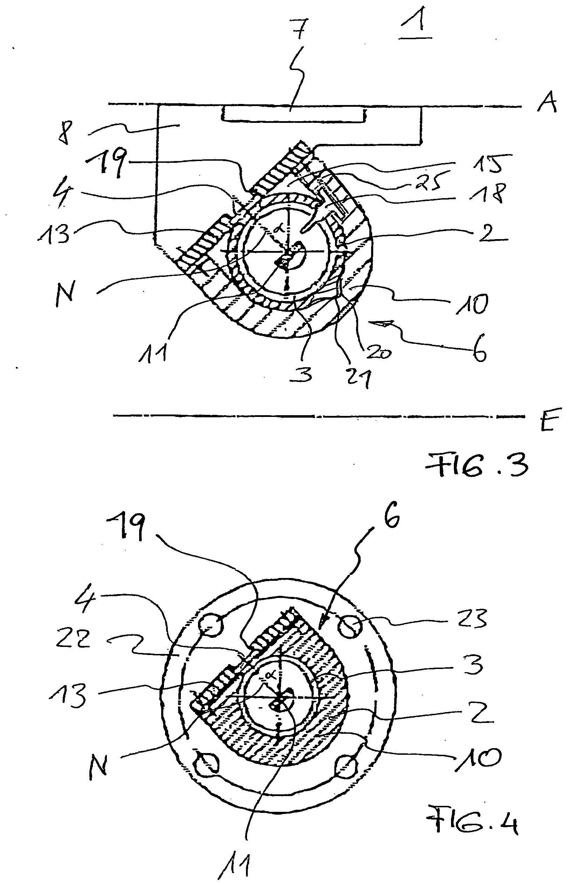

In Fig. 3 ist das Messrohrgehäuse 2 zusammen mit einer Halteeinrichtung 6 sowie dem Gehäuse 8 zur Aufnahme der Elektronikbauteile dargestellt. An der Oberseite des Gehäuses 8 befindet sich ein mit der Bezugsziffer 7 angedeutetes Anzeigeelement, beispielsweise in Form einer LCD-Anzeige. Das Anzeigeelement 7 liegt in der Ebene A (Anzeigeebene).

Das Messrohrgehäuse 2 ist über die Halteeinrichtung 6 an dem Gehäuse 8 fixiert. Die Halteeinrichtung 6 umfasst ein eine Ausnehmung 15 bildendes erstes Halteteil 10, welches das Messrohrgehäuse 2 umschließt. Ferner ist ein zweites Halteteil 13, welches in der Ausgestaltung nach Fig. 3 eine plattenartige Form besitzt, vorgesehen. Das Messrohrgehäuse 2 wird zwischen dem ersten Halteteil 10 und dem zweiten Halteteil 13 eingespannt, beispielsweise, in dem die beiden Halteteile 10, 13 über (nicht dargestellte Schrauben) verschraubt also miteinander verspannt werden.

Alternativ kann das Verbinden des ersten und zweiten Halteteils 10, 13 auch über ein einseitiges Einhängen mittels einer aufeinander abgestimmten, einseitig angebrachten Einhakgeometrie von erstem und zweitem Halteteil 10. 13 und gegenüberliegendem Verschrauben erfolgen.

Der Ultraschallwandler 4 befindet sich hierbei beispielsweise in einer Aussparung 19 am zweiten Halteteil 13, die mit einer Bohrung im Messrohrgehäuse 2 fluchtet. Im eingespannten Zustand wird der Ultraschallwandler 4 konstruktionsbedingt innerhalb der Aussparung gehalten. Mechanische Beeinträchtigungen werden vom zweiten Halteteil 13 vorteilhaft aufgenommen.

Des Weiteren sitzt in einer Tasche 25 am ersten Halteteil 10 ein Temperaturfühler 18. Auch dieser Temperaturfühler 18 wird konstruktionsbedingt in der Tasche 25 gehalten. Um ein Aufschieben des ersten Halteteils 10 bei vormontiertem Temperaturfühler 18 zu ermöglichen, verläuft die Tasche 25 parallel zur Zeichnungsebene bis zum offenen Ende des ersten Halteteils. Die Tasche 25 ist der Größe des in den ersten Halteteil eintauchenden Temperaturfühlers 18 angepasst ist. Der verbleibende (in Fig. 3 nicht dargestellte Hohlraum) wird durch ein (in Fig. 3 ebenfalls nicht dargestelltes) Füllstück z. B. aus Kunststoff oder Gummi nachträglich wieder verschlossen.

In das Messrohrgehäuse 2 ist z.B. an der dem Ultraschallwandler 4 gegenüber liegenden Seite ein Vorsprung 21 eingeformt, der in eine entsprechende Ausnehmung 20 am ersten Halteteil 10 eingreift. Hierdurch wird eine Verdrehsicherung z. B. beim Verschrauben des Fluidzählers mit dem Netzanschluss gewährleistet.

Der zweite Halteteil 13 kann als eigenständiges Teil mit dem Gehäuse 8 beispielsweise über eine Schnappverbindung, Klemmverbindung oder dergleichen verbunden sein. Die Ebene E in Fig. 3 kennzeichnet die Ausrichtung der Ebene in der Einbaulage des Fluidzählers 1, die mit der Anzeigeebene A parallel ist.

In Fig. 4 ist eine Ausgestaltung eines nicht erfindungsgemäßen Fluidzählers unter Weglassung des Gehäuses 8 für die Elektronikbauteile dargestellt. Das Messrohrgehäuse 2 besitzt hierbei einen Flansch 22 mit einzelnen Flanschbohrungen 23 zur lagevorbestimmten Montage an das Leitungsnetz. Der Flansch 22 ist in der Regel an beiden Enden des Messrohrgehäuses 2 vorgesehen. Die Ausgestaltung nach Fig. 4 besitzt ebenfalls ein Gehäuse 8 für die Elektronikbauteile, welches jedoch in Fig. 4 der Übersichtlichkeit halber nicht dargestellt ist. Im Gegensatz zur Ausgestaltung nach Fig. 3 ist das erste Halteteil 10 der Halteeinrichtung 6 integraler Bestandteil des Messrohrgehäuses 2. Das Messrohrgehäuse kann z. B. aus Kunststoff in einem Produktionsschritt hergestellt werden.

Die in Fig. 3 dargestellte Ausnehmung 20 sowie der darin eingreifende Vorsprung 21 sind bei der Ausgestaltung nach Fig. 4 nicht unbedingt notwendig.

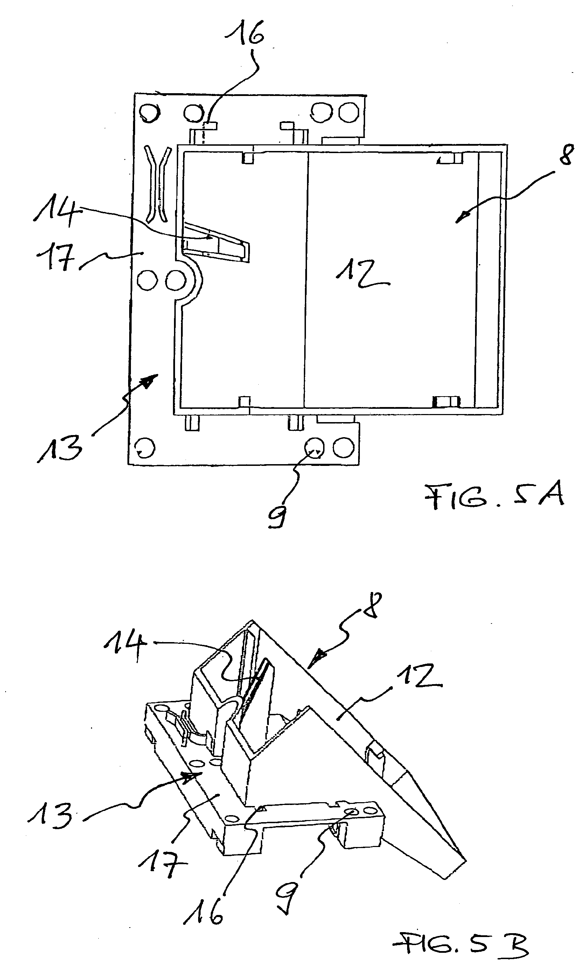

Fig. 5A zeigt das Gehäuse 8 für die Elektronikbauteile sowie das zweite Halteteil 13 der Halteeinrichtung 6 für das Messrohrgehäuse 2. Die Gehäuseausnehmung 12 ist dazu vorgesehen, ein Anzeigeelement, beispielsweise ein LCD-Display oder dergleichen, aufzunehmen. Weiterhin befindet sich im Bereich der Gehäuseausnehmung 12 eine Platine mit Bauteilen der Steuerungselektronik, der Elektronik für die Messwertverarbeitung sowie der Datenweitergabe.

Im Bereich der Gehäuseausnehmung 12 befindet sich zweckmäßigerweise auch eine (nicht dargestellte) Energiequelle.

In die Gehäuseausnehmung 12 eingeformt ist ein Führungskanal 14 für die Leitungsverbindung eines Temperaturfühlers. Das Gehäuse 8 ist über mehrere Schnappverbindungen 16 mit dem zweiten Halteteil 13 lösbar verbunden und hierbei derart dimensioniert, dass das zweite Halteteil 13 einen umlaufenden Vorsprung 17 bildet, der die einzelnen Montagepositionen, z.B. Durchgangsbohrungen, aufnimmt.

Sowohl das zweite Halteteil 13 als auch das Gehäuse 8 sind vorzugsweise als Kunststoffformteile konzipiert.

Zur Abdeckung des Gehäuses 8 ist eine (in den Fig. 5A sowie 5B nicht dargestellte) Abdeckung vorgesehen, die über ebenfalls nicht dargestellte

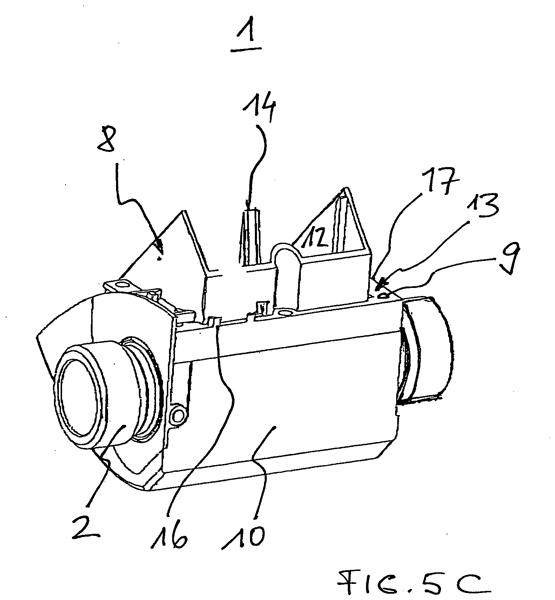

Rastverbindungen mit dem Gehäuse 8 verbindbar ist. Gemäß Fig. 5C schließt sich im montierten Zustand das erste Halteteil 10, welches in diesem Fall die Form einer Wanne hat, nahezu über die gesamte Länge des Messrohrgehäuses 2 und fixiert dieses in seiner Lage.

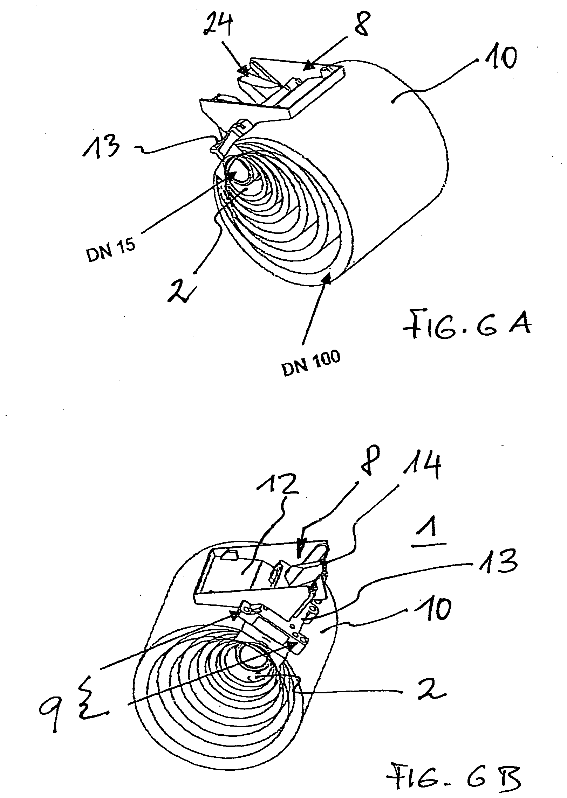

Wie aus den Fig. 6A sowie 6B hervorgeht, kann für Messrohrgehäuse 2 Messrohrgehäuse 2 mit verschiedenen Nenndurchmessern (beispielsweise Nenndurchmesser DN 15 - DN 100) eine standardisierte Anordnung, bestehend aus Gehäuse 8 sowie zweites Halteteil 13, eingesetzt werden.

Die z. B. in Fig. 5A sowie 5B dargestellten unterschiedlich angeordneten Montagepositionen 9 ermöglichen es, durch Auswahl der Montagepositionen unterschiedlich große Messrohrgehäuse 2 zu befestigen. Der zweite Halteteil 13 wirkt hierbei wie ein Adapter.

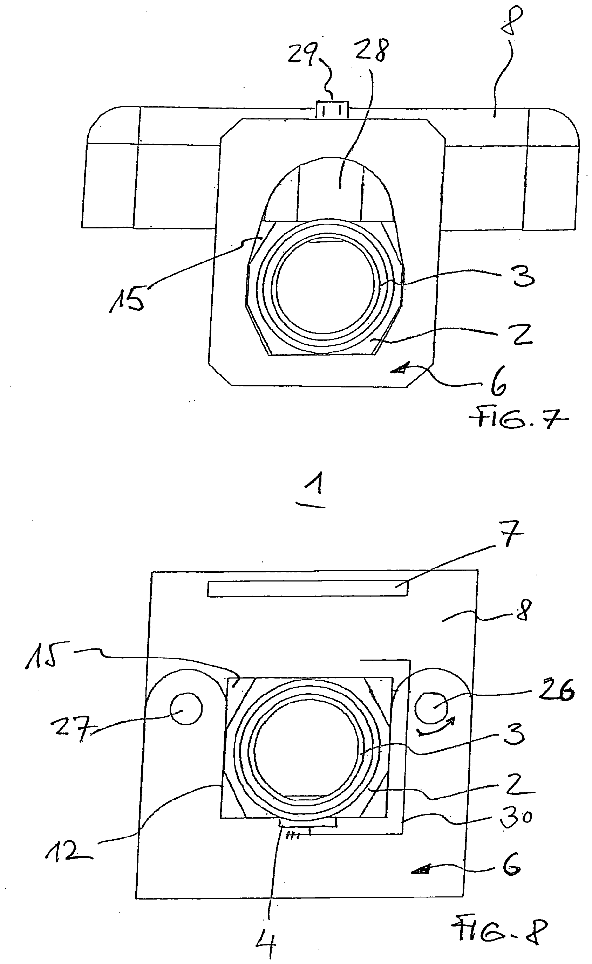

Fig. 7 zeigt eine weitere Ausgestaltung des Fluidzählers in stark vereinfachter Darstellungsweise. Zur Fixierung des Messrohrgehäuses 2 am Gehäuse 8 ist eine einteilige Halteeinrichtung 6, welche die Form eines umlaufenden Bügels oder Rings hat, vorgesehen. Die Halteeinrichtung 6 wird bei positioniertem Messrohrgehäuse 2 in Längsrichtung, d.h. axial zur Längsrichtung des Messrohrs 3 aufgeschoben und mit dem Gehäuse 8 fixiert. Beispielsweise kann zur Fixierung eine (nicht dargestellte) Verrastung zwischen Übergriffteil und einem Ansatz 28 am Gehäuse 8 vorgesehen sein.

Mittels der Halteeinrichtung 6 kann das Messrohrgehäuse 2 lagefest zwischen Übergriffteil und Gehäuse 8 eingespannt werden. Der Ansatz 28 kann einteilig mit dem Gehäuse ausgebildet oder mit dem Gehäuse 8 beispielsweise über eine Schnappverbindung verbindbar sein. Zur Lagefixierung der Halteeinrichtung 6, zum Toleranzausgleich und zum Festspannen des Messrohrgehäuses kann zusätzlich eine Schraube 29 vorgesehen sein.

Zwischen dem Messrohrgehäuse 2 und dem Ansatz 28 ist eine (nicht dargestellte) Gummischicht vorgesehen, welche ebenfalls Toleranzen ausgleicht und zur Abdichtung des (ebenfalls nicht dargestellten) Ultraschallwandlers dient. Anstelle der Gummischicht können auch andere federnde Elemente, beispielsweise eine Druckfeder oder dergleichen, zum Toleranzausgleich eingesetzt werden.

Die Ausgestaltung gemäß Fig. 8 zeigt ein Gehäuse 8 mit einem oberseitigen Anzeigeelement 7. Die Halteeinrichtung 6 ist als C-förmiger Bügel ausgebildet. der über ein Scharnier 26 mit dem Gehäuse 8 in Verbindung steht. Das Gehäuse 8 und die Halteeinrichtung 6 bilden zusammen eine Ausnehmung 15 zur Aufnahme des Messrohrgehäuses 2. Vom Ultraschallwandler 4 aus wird in dem Bügel der Halteeinrichtung 6 ein Kabel 30 zu den Elektronikbauteilen des Gehäuses 8 geführt. Das Messrohrgehäuse 2 wird z.B. nach dem Versiegeln (Vergießen) des Gehäuses 8 in den Bügel eingelegt. Anschließend wird der Bügel hochgeklappt und an der Schnappverbindung 27 mit dem Gehäuse 8 verschnappt.

### BEZUGSZEICHENLISTE

- 1: Fluidzähler
- 2: Messrohrgehäuse
- 3: Messrohr
- 4: Ultraschallwandler
- 5: Ultraschallwandler
- 6: Halteeinrichtung
- 7: Anzeigeelement
- 8: Gehäuse
- 9: Montageposition
- 10: erstes Halteteil
- 11: Umlenkeinrichtung
- 12: Gehäuseausnehmung
- 13: zweites Halteteil
- 14: Führungskanal (Temp-Fühler)
- 15: Ausnehmung
- 16: Schnappverbindung
- 17: Vorsprung
- 18: Temperaturfühler
- 19: Aussparung
- 20: Ausnehmung
- 21: Vorsprung
- 22: Flansch
- 23: Flanschbohrungen
- 24: Führungskanal (Wandlerkabel)
- 25: Tasche
- 26: Scharnier
- 27: Schnappverbindung
- 28: Ansatz
- 29: Schraube
- 30: Kabel

## Patentansprüche

1. Fluidzähler (1) mit
einem Messrohr (3),
einem Anzeigeelement (7) mit einer Anzeigeebene A,
einer Ultraschallwandleranordnung aus mindestens einem Ultraschallwandler (4 bzw. 5) zum Erzeugen eines Ultraschallsignals und/oder zur Umwandlung eines die Messstrecke durchlaufenden Ultraschallsignals in ein elektrisches Signal,
einer innerhalb des Messrohrs (3) angeordneten Umlenkeinrichtung (11) zur Umlenkung des Ultraschallsignals,
und einem Elektronikgehäuse (8), welches das Anzeigeelement (7) umfasst, **dadurch gekennzeichnet, dass**
ein Messrohrgehäuse (2) vorgesehen ist, wobei die Ultraschallwandler (4, 5) in Ausnehmungen am Messrohrgehäuse (2) positioniert sind,
sich die Messstrecke im Messrohrgehäuse (2) befindet,
die Umlenkeinrichtung (11) das Ultraschallsignal in Längsrichtung des Messrohrs (3) umlenkt,
das Messrohrgehäuse (2) in einer Halteeinrichtung (6) untergebracht ist, die an das Elektronikgehäuse (8) montiert ist,
und der Ultraschallwandler (4 bzw. 5) angeordnet ist, derart, dass die Flächennormale N des Ultraschallwandlers (4 bzw. 5) in einem schrägen Winkel α bezogen auf die Senkrechte zur Anzeigeebene A geneigt angeordnet ist, so dass das Ultraschallsignal in Einbaulage bei horizontaler Rohrleitung mit horizontal ausgerichteter Anzeigeebene A des Fluidzählers (1) nicht von oben auf die Umlenkeinrichtung (11) auftrifft.

2. Fluidzähler nach Anspruch 1,
**dadurch gekennzeichnet, dass**
die Flächennormale N des Ultraschallwandlers (4 bzw. 5) bezogen auf die Senkrechte zur Anzeigeebene A in einem Winkelbereich von 30° - 60°, vorzugsweise 40° - 50°, vorzugsweise 42° - 48° liegt.

3. Fluidzähler nach Anspruch 1,
**dadurch gekennzeichnet, dass**
das Ultraschallsignal in Einbaulage von der Unterseite auf die Umlenkeinrichtung (11) auftrifft.

4. Fluidzähler nach Anspruch 1,
**dadurch gekennzeichnet, dass**
das Messrohrgehäuse (2) in der Halteeinrichtung (6) festklemmbar ist.

5. Fluidzähler nach Anspruch 1 oder 4,
**dadurch gekennzeichnet, dass**
die Halteeinrichtung (6) ein erstes Halteteil (10) sowie ein zweites Halteteil (13) aufweist, die eine Ausnehmung (15) zur Aufnahme des Messrohrgehäuses (2) bilden.

6. Fluidzähler nach Anspruch 5,
**dadurch gekennzeichnet, dass**
mindestens ein Funktionsteil, insbesondere ein Wandler (4 und/oder 5) und/oder einen Temperaturfühler (18), durch die Halteeinrichtung (6) in Position gehalten wird.

7. Fluidzähler nach mindestens einem der Ansprüche 1 - 6,
**dadurch gekennzeichnet, dass**
eine Verdrehsicherung zwischen Messrohrgehäuse (2) und Halteeinrichtung (6) vorgesehen ist.

8. Fluidzähler nach mindestens einem der Ansprüche 1 - 7,
**dadurch gekennzeichnet, dass**
das erste Halteteil (10) in das Messrohrgehäuse (2) integriert ist.

9. Fluidzähler nach mindestens einem der Ansprüche 1 - 8,
**dadurch gekennzeichnet, dass**
das zweite Halteteil (13) als einheitliches Teil zur Aufnahme von ersten Halteteilen (10) mit verschiedenen Durchflussnennquerschnitten vorgesehen ist.

10. Fluidzähler nach Anspruch 9,
**dadurch gekennzeichnet, dass**
am zweiten Halteteil (13) mehrere wählbare Montagepositionen (9) vorgesehen sind.

11. Fluidzähler nach mindestens einem der Ansprüche 5 - 10,
**dadurch gekennzeichnet, dass**
das zweite Halteteil (13) mit dem Elektronikgehäuse (8) lösbar verbunden ist.

12. Fluidzähler nach mindestens einem der Ansprüche 5 - 10,
**dadurch gekennzeichnet, dass**
die Montageposition (9) in einem Bereich an dem ersten Halteteil (10) vorliegt, der seitlich vom Elektronikgehäuse (8) vorspringt.

13. Fluidzähler nach mindestens einem der Ansprüche 5 - 12,
**dadurch gekennzeichnet, dass**
im Elektronikgehäuse (8) mindestens ein Führungskanal (14 und/oder 24) für Kabelverbindungen vorgesehen ist.

14. Fluidzähler nach mindestens einem der vorhergehenden Ansprüche 5 - 13,
**dadurch gekennzeichnet, dass**
das erste Halteteil (10) als Schale ausgebildet ist.

15. Fluidzähler nach mindestens einem der Ansprüche 5 - 13,
**dadurch gekennzeichnet, dass**
mehrere erste Halteteile (10) vorgesehen sind, die das Messrohrgehäuse (2) in Abstand zueinander umgreifen.

## Claims

1. Fluid counter (1) having
a measuring tube (3),
a display element (7) with a display plane A,
an ultrasonic transducer arrangement composed of at least one ultrasonic transducer (4 or 5) for generating an ultrasonic signal and/or for converting an ultrasonic signal, which passes through the measured section, into an electrical signal,
a deflection device (11) which is arranged inside the measuring tube (3) and has the purpose of deflecting the ultrasonic signal,
and an electronics housing (8) which encompasses the display element (7), **characterized in that** a measuring tube housing (2) is provided, wherein the ultrasonic transducers (4, 5) are positioned in recesses on the measuring tube housing (2),
the measured section is located in the measuring tube housing (2),
the deflection device (11) deflects the ultrasonic signal in the longitudinal direction of the measuring tube (3), the measuring tube housing (2) is accommodated in a holding device (6) which is mounted on the electronics housing (8),
and the ultrasonic transducer (4 or 5) is arranged in such a way that the surface normal N of the ultrasonic transducer (4 or 5) is arranged inclined at an oblique angle α with respect to the perpendicular to the display plane A, with the result that in the installation position, with horizontal piping and with a horizontally oriented display plane A of the fluid counter (1), the ultrasonic signal does not strike the deflection device (11) from above.

2. Fluid counter according to Claim 1,
**characterized in that**
the surface normal N of the ultrasonic transducer (4 or 5) is in an angle range of 30°-60°, preferably 40°-50°, preferably 42°-48°, with respect to the perpendicular to the display plane A.

3. Fluid counter according to Claim 1,
**characterized in that**
in the installation position the ultrasonic signal impinges on the deflection device (11) from the underside.

4. Fluid counter according to Claim 1,
**characterized in that**
the measuring tube housing (2) can be clamped tight in the holding device (6).

5. Fluid counter according to Claim 1 or 4,
**characterized in that**
the holding device (6) has a first holding part (10) and a second holding part (13) which form a recess (15) for receiving the measuring tube housing (2).

6. Fluid counter according to Claim 5,
**characterized in that**
at least one functional part, in particular a transducer (4 and/or 5) and/or a temperature sensor (18) are held in position by the holding device (6).

7. Fluid counter according to at least one of Claims 1-6,
**characterized in that**
an anti-twist prevention means is provided between the measuring tube housing (2) and holding device (6).

8. Fluid counter according to at least one of Claims 1-7,
**characterized in that**
the first holding part (10) is integrated into the measuring tube housing (2).

9. Fluid counter according to at least one of Claims 1-8,
**characterized in that**
the second holding part (13) is provided as a uniform part for receiving first holding parts (10) with different through-flow cross sections.

10. Fluid counter according to Claim 9,
**characterized in that**
a plurality of selectable mounting positions (9) are provided on the second holding part (13).

11. Fluid counter according to at least one of Claims 5-10,
**characterized in that**
the second holding part (13) is detachably connected to the electronics housing (8).

12. Fluid counter according to at least one of Claims 5-10,
**characterized in that**
the mounting position (9) is in a region on the first holding part (10) which projects laterally from the electronics housing (8).

13. Fluid counter according to at least one of Claims 5-12,
**characterized in that**
at least one guide duct (14 and/or 24) for cable connections is provided in the electronics housing (8).

14. Fluid counter according to at least one of the preceding claims 5-13,
**characterized in that**
the first holding part (10) is embodied as a shell.

15. Fluid counter according to at least one of Claims 5-13,
**characterized in that**
a plurality of first holding parts (10) are provided which engage around the measuring tube housing (2) at a distance from one another.

## Revendications

1. Compteur de fluide (1) comportant
un tube de mesure (3),
un élément d'affichage (7) doté d'un plan d'affichage A,
un dispositif convertisseur d'ultrasons composé d'au moins un convertisseur d'ultrasons (4 ou 5) pour la génération d'un signal ultrasonore et/ou pour la conversion d'un signal ultrasonore traversant le parcours de mesure en un signal électrique,
un dispositif de déviation (11) disposé à l'intérieur du tube de mesure (3) pour la déviation du signal ultrasonore,
et un boîtier électronique (8) qui comprend l'élément d'affichage (7), **caractérisé en ce**
**qu'**il est prévu un boîtier de tube de mesure (2), les convertisseurs d'ultrasons (4, 5) étant disposés dans des évidements du boîtier de tube de mesure (2),
**que** le parcours de mesure se trouve dans le boîtier de tube de mesure (2),
**que** le dispositif de déviation (11) dévie le signal ultrasonore dans le sens longitudinal du tube de mesure (3),
**que** le boîtier de tube de mesure (2) est logé dans un dispositif de retenue (6) qui est monté au niveau du boîtier électronique (8),
et **que** le convertisseur d'ultrasons (4 ou 5) est disposé de manière à ce que la normale surfacique N du convertisseur d'ultrasons (4 ou 5) soit disposée inclinée suivant un angle oblique α par rapport à la perpendiculaire au plan d'affichage A, de sorte que le signal ultrasonore, en position de montage, avec une canalisation horizontale dotée d'un plan d'affichage A orienté horizontalement du compteur de fluide (1), n'arrive pas par le haut sur le dispositif de déviation (11) .

2. Compteur de fluide selon la revendication 1,
**caractérisé en ce que**
la normale surfacique N du convertisseur d'ultrasons (4 ou 5), par rapport à la perpendiculaire au plan d'affichage A, se situe dans une plage angulaire de 30° - 60°, de préférence 40° - 50°, de préférence 42° - 48°.

3. Compteur de fluide selon la revendication 1,
**caractérisé en ce que**
le signal ultrasonore, en position de montage, arrive par le dessous sur le dispositif de déviation (11).

4. Compteur de fluide selon la revendication 1,
**caractérisé en ce que**
le boîtier de tube de mesure (2) peut être bloqué dans le dispositif de retenue (6).

5. Compteur de fluide selon la revendication 1 ou 4,
**caractérisé en ce que**
le dispositif de retenue (6) présente une première pièce de retenue (10) ainsi qu'une seconde pièce de retenue (13) qui constituent un évidement (15) destiné à recevoir le boîtier de tube de mesure (2).

6. Compteur de fluide selon la revendication 5,
**caractérisé en ce**
**qu'**au moins une pièce fonctionnelle, en particulier un convertisseur (4 et/ou 5) et/ou une sonde de température (18) est maintenue en position par le dispositif de retenue (6).

7. Compteur de fluide selon au moins une des revendications 1 à 6,
**caractérisé en ce**
**qu'**il est prévu un système anti-rotation entre le boîtier de tube de mesure (2) et le dispositif de retenue (6).

8. Compteur de fluide selon au moins une des revendications 1 à 7,
**caractérisé en ce que**
la première pièce de retenue (10) est intégrée dans le boîtier de tube de mesure (2).

9. Compteur de fluide selon au moins une des revendications 1 à 8,
**caractérisé en ce que**
la seconde pièce de retenue (13) est prévue sous forme d'une pièce uniforme destinée à recevoir de premières pièces de retenue (10) dotées de différentes sections transversales nominales de débit.

10. Compteur de fluide selon la revendication 9,
**caractérisé en ce que**,
au niveau de la seconde pièce de retenue (13), plusieurs positions de montage sélectionnables (9) sont prévues.

11. Compteur de fluide selon au moins une des revendications 5 à 10,
**caractérisé en ce que**
la seconde pièce de retenue (13) est reliée de manière dissociable au boîtier électronique (8).

12. Compteur de fluide selon au moins une des revendications 5 à 10,
**caractérisé en ce que**
la position de montage (9) se trouve dans une zone située au niveau de la première pièce de retenue (10) qui est saillante sur le côté du boîtier électronique (8) .

13. Compteur de fluide selon au moins une des revendications 5 à 12,
**caractérisé en ce que**,
dans le boîtier électronique (8), il est prévu au moins un canal de guidage (14 et/ou 24) pour des liaisons câblées.

14. Compteur de fluide selon au moins une des revendications précédentes 5 à 13,
**caractérisé en ce que**
la première pièce de retenue (10) se présente sous forme d'une coque.

15. Compteur de fluide selon au moins une des revendications 5 à 13,
**caractérisé en ce**
**qu'**il est prévu plusieurs premières pièces de retenue (10) qui entourent le boîtier de tube de mesure (2) en étant espacées les unes des autres.
